(19) Europäisches Patentamt
European Patent Office
Office européen des brevets

(11)  **EP 1 371 146 B1**

(12)  **EUROPEAN PATENT SPECIFICATION**

(45) Date of publication and mention
of the grant of the patent:
**12.01.2011  Bulletin 2011/02**

(51) Int Cl.:
**H04B 1/707** *(2011.01)*     **H04B 7/08** *(2006.01)*

(21) Application number: **02705004.6**

(86) International application number:
**PCT/IB2002/000814**

(22) Date of filing: **19.03.2002**

(87) International publication number:
**WO 2002/075950 (26.09.2002 Gazette 2002/39)**

(54) **INTERFERENCE REJECTION IN A RECEIVER**

STÖRUNGSUNTERDRÜCKUNG IN EINEM EMPFÄNGER

PROCEDE DE REJET DES INTERFERENCES DANS UN RECEPTEUR

(84) Designated Contracting States:
**AT BE CH CY DE DK ES FI FR GB GR IE IT LI LU MC NL PT SE TR**

(30) Priority: **21.03.2001  GB 0107113**

(43) Date of publication of application:
**17.12.2003  Bulletin 2003/51**

(73) Proprietor: **Nokia Corporation**
**02150 Espoo (FI)**

(72) Inventors:
• **ASTELY, David**
**S-11239 Stockholm (SE)**
• **ARTAMO, Atte**
**FIN-00140 Helsinki (FI)**

(74) Representative: **Ruuskanen, Juha-Pekka et al**
**Page White & Farrer**
**Bedford House**
**John Street**
**London**
**WC1N 2BF (GB)**

(56) References cited:
**WO-A1-00/36765     US-A- 6 091 361**

• **ILTIS R.A. ET AL.: 'A DS spread spectrum RAKE received with narrowband interference rejection capability: operation in fading channels' MILITARY COMMUNICATIONS CONFERENCE, 1989 IEEE vol. 3, 1989, pages 704 - 708, XP000131901**
• **HAIMOVICH A.M. ET AL.: 'The performance of space-time processing for suppressing narrowband interference in CDMA communications' WIRELESS PERSONAL COMMUNICATIONS (KLUWER ACADEMIC PUBLISHERS) vol. 7, 1998, pages 233 - 255, XP000755055**
• **ILTIS R.A. ET AL.: 'Interference rejection in FFH systems using least-squares estimation techniques' MILITARY COMMUNICATIONS CONFERENCE, 1988 IEEE vol. 2, 1988, pages 631 - 635, XP000011317**

**Description**

Field of the Invention

The present invention relates to interference rejection in a receiver, and in particular, but not exclusively, to interference rejection in a diversity receiver arrangement for communication system adapted for simultaneous reception of a plurality of signals.

Background of the Invention

Communication systems enabling wireless communication are known. The so called cellular telecommunication networks are an example of communication systems enabling wireless communication between stations. In a cellular network the area covered by the network is divided into a plurality of cells. Each cell is served by a base station which transmits signals in the downlink (DL) direction to and receives signals in the uplink (UL) direction from mobile stations in the associated cell. These mobile stations can be mobile telephones or any other type of mobile user equipment terminals such as a portable computer with telecommunication capabilities.

Several different cellular systems are known. These are typically standardised such that the various elements of the particular system may operate within the system. The standards define, among other things, features on that are to be used by the system such as the frequency range, access technique, multiplexing technique and so.

An example of the access techniques used by the cellular systems is the code division multiple access (CDMA). The CDMA a direct sequence spread spectrum technique. The use of (CDMA) or a wideband CDMA (WCDMA) is being proposed for the next generation of cellular telecommunication networks (the so called third generation (3G) standards). Code division multiple access is also employed e.g. in the IS-95 and IMT 2000 standards.

With the CDMA technique the base stations and mobile stations may transmit signals over all of the available frequency range. The mobile stations in one cell associated with a first base station may also use the same frequency as mobile stations in an adjacent cell associated with a second base station. A mobile station or a base station will therefore receive a relatively large number of signals in the used frequency range. The different mobile stations can be distinguished by the respective base stations as each mobile station will be using a different spreading code. In order to isolate a particular signal, the signals are despread. That is, in order to distinguish the signals, different and typically orthogonal spreading codes are applied thereto and in reception the desired signal is isolated from other signals based on information of the spreading code. The undesired signals will in a typical case provide interference.

The capacity of a CDMA system depends on the level of the interference to a desired signal. If the signal to interference ratio (SIR) of the connection does not meet a certain threshold value the quality of the service may become reduced and/or a connection relying on the desired signal may not be established at all or may be dropped.

A wireless communication system is thus inherently interference limited. Interference may severely affect the performance of the system, both in the terms of capacity and coverage. Forms of interference include, without limiting to these, multiple access interference from other users in the system (either in the same or different cells) and adjacent channel interference (ACI) such as interference from other WCDMA FDD and TDD carriers. External interference may also be caused by other communication systems operating in the same frequency band or other frequency bands. For example, systems such as the GSM and PHS may interfere with a WCDMA based system. Interference may also be caused by non-linearities in the transmitters and by other non-ideal effects.

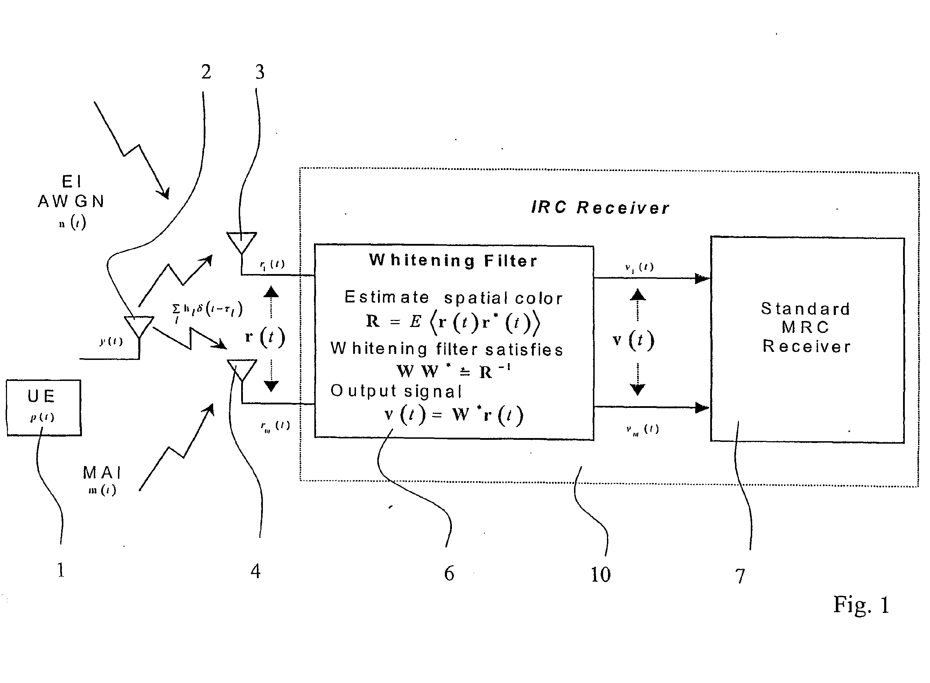

Figure 1 shows two different types of interference influencing the transmission, that is external interference (EI) and multiple access interference (MAI). Although not shown in Figure 1, other types of interference may also be present. For example, if an operator licenses a band in which several frequency division duplex (FDD) and/or time division duplex (TDD) WCDMA carriers are located (e.g. to realise hierarchical cell structures), adjacent channel interference (ACI) between the carriers may also cause problems.

For example, in the WCDMA uplink (UL) band, external interference (EI) from e.g. a co-sited base station of another cellular communication system (such as a GSM system) can significantly reduce the cell coverage. In the worst case the external interference may shrink the cell coverage so much that all or almost all users in the cell lose their uplink connection. In the downlink (DL) band the external interference may also reduce the cell coverage for some mobile stations and may block some of the mobile station receivers. The problem is believed to be somewhat less severe in the downlink than in the uplink since the mobile stations are in most occasions dispersed in the cell area and it is thus that likely that the receivers of all mobile stations would be blocked. Nevertheless, some mobile stations may still become blocked.

By using multiple antennae it is possible to combine the signals and utilise spatial and polarisation diversity. In addition, the received signals in different frequencies may also be combined at the receiver. This can be employed in order to reject at least some of the interference. If a receiver is employed with antenna diversity, it is possible to combine the signals in different ways. One such technique, interference rejection combining (IRC), aims at combining the antenna signals in such a way that at least a part of the interference becomes rejected. This is facilitated by using the spatial colour, i.e. the correlation between interference received by different diversity branches.

The data can be transmitted over a wireless interface as data symbols. The receiving antenna and multipath combining procedure need to be arranged such that the transmitted symbols can be detected as correctly as possible. In addition to the detection algorithm, a baseband receiver may contain several other necessary algorithms for delay estimation, signal to interference ratio estimation and so on.

However, in an IRC receiver wherein the spatial colour of the interference is employed in rejection of the interference these algorithms must take said spatial colour of the interference and noise into account. In general, this requirement makes the design of the IRC receivers substantially complex. The IRC functionality is conventionally implemented after the despreading operations. This requires the IRC operations need to be implemented at several places. Thus further increasing the complexity of the IRC receiver arrangement.

US-A-6,091,361 discloses processing methods and associated hardware architectures for the spatio-temporal processing of phased array sensor signals. The processing method employs a joint spatio-temporal domain processing approach. The disclosed approach emphasises the use of multiple hypothesis testing with spatio-temporal whitening filters.

ILTIS R.A. et al.: 'A DS spread spectrum RAKE received with narrowband interference rejection capability: operation in fading channels' Military Communications Conference, 1989 IEEE vol. 3 1989, pages 704-708, XP000131901 discloses a DS spread spectrum RAKE receiver with narrowband interference rejection capability. The RAKE receiver operates under the conditions of a frequency selective fading channel with narrowband tone interference. Interference rejection capability is added to a basic non-coherent RAKE receiver by including a front end pre-whitening filter.

Summary of Invention

Embodiments of the present invention aim to address one or several of the above problems.

According to one aspect of the present invention, there is provided an interference rejection method for use in a receiver comprising: receiving a plurality of code division multiple access (CDMA) signals; determining a spatial correlation of the received CDMA signals; filtering the CDMA signals by a whitening filter that is determined based on said determined spatial correlation; outputting spatially white CDMA signals from the filter; and inputting the whitened CDMA signals to a diversity receiver, by providing said whitened CDMA signals as input to at least one of a signal to interference ratio estimator, a despreader, a rake allocator and a channel estimator.

In more specific embodiments the diversity receiver may comprise a maximum ratio combining receiver. The step of determining the spatial correlation may comprise sampling of the signals. The whitening filter maybe updated in predefined intervals. The update may be performed after each received sample. The samples may also be buffered.

The filtering may be based on matrix times vector multiplication. Signals received by different antennae at a given time may be collected into a vector. The diversity receiver may assume that any noise and interference is uncorrelated between different antennae.

A signal may be sampled at a rate which is twice the chiprate of the signal.

Digital beamforming may be used at the reception of the signals. Information regarding the direction of arrival of the signals may be utilised.

According to another aspect of the present invention there is provided a receiver comprising: means for determining spatial correlation of a plurality of received CDMA signals; filter means adapted to filter the CDMA signals with a whitening filter that has been determined based on said spatial correlation; and a diversity receiver means located such that spatially white CDMA signals from the filter means are input in the diversity receiver means, said whitened CDMA signals being provided as input to at least one of a signal to interference ratio estimator, a despreader, a rake allocator and a channel estimator.

The filter means may be implemented by means of a modular entity at the front end of a maximum ratio combining receiver. The interference rejection combining may be accomplished at its entirety at one functional entity of the receiver.

According to another aspect of the present invention there is provided a station of a cellular communication system, comprising antenna means and the receiver.

The embodiments of the invention provides several advantages. When compared to standard maximum ratio combining (MRC) technique, pre-whitening filtering may be employed to implement an interference rejection combining procedure that can be used to mitigate the effects of spatially coloured interference. By means of the interference rejection the capacity and coverage of the communication system may be improved. By rejecting at least a portion of the external interference it may become possible to maintain the cell coverage and capacity also in the presence of a substantial amount of external interference. The embodiments may also be useful in increasing cell capacity in the uplink if the multiple access interference (MAI) is spatially coloured.

In addition, implementation of the interference rejection procedures at the front-end of the receiver arrangement may enable centralisation of the interference rejection function into a single block or module instead of integrating a interference rejection function at all those places where diversity combining is accomplished, e.g. in rake combining, signal-to-interference ratio (SIR) estimation, rake allocation stages and so on. Thus, instead of changing all baseband algorithms so that they can handle spatially coloured interference, a single pre-filter may be used instead.

Prefiltering of the received signals so that it they become spatially white may enable centralisation of all interference rejection functionality to a single block leaving all the other baseband intact. Thus invention may simplify the structure of a receiver. Some embodiments may require a sampling rate which is typically twice the chiprate and processing in terms of a matrix vector multiplication at the sampling rate. This may be advantageous with regard to the performance gains and the small impact on other parts (baseband algorithms and functions) in a receiver.

Brief Description of Drawings

For better understanding of the present invention, reference will now be made by way of example to the accompanying drawings in which:

Figure 1 shows a block diagram illustrating an embodiment of the present invention;
Figure 2 shows a possible receiver arrangement comprising a pre-filter and a diversity receiver; and
Figure 3 is a flowchart illustrating the operation of one embodiment of the present invention.

Description of Preferred Embodiments of the Invention

Reference is made to Figure 1 which shows a receiver arrangement 10 employing interference rejection combining (IRC) in accordance with the present invention. The receiver arrangement may be for use in a base station of a cellular communication system, for example for a base station to be used in a wideband code division multiple access (WCDMA) system.

The receiver is shown to be provided with multiple diversity antenna means. More particularly, the receiver 10 is provided with two reception antennae 3 and 4 for receiving multicarrier radio frequency signals transmitted by antenna means 2 of a transmitting user equipment (UE) 1. The number of antennae is preferably more than two.

The embodiment is based on the concept of implementing the interference rejection capability by means of a pre-filter entity 6. The pre-filter entity 6 can be a modular unit that is located before a standard maximum ratio combining (MRC) receiver entity 7 on the signal path of the receiver arrangement. The entire interference rejection combining (IRC) function may be placed in this single functional entity. The IRC function may be implemented as a modular unit. If the interference rejection function is implemented after the despreading, as is the case in the prior art, then the interference rejection function needs to be implemented at several places, thus making it difficult if not impossible to provide a modular IRC arrangement.

The pre-filter 6 is adapted to measure the spatial correlation of the received signals and to subsequently determine a whitening filter which is to be used for filtering of the signals. The whitening filter is selected so that the signals of different branches are spatially white after the filtering operations. This means that the signals are uncorrelated and have the same power. The filtering can be based on matrix times vector multiplication.

The signals received by the different antennae are sampled at the same time and collected into a vector. A linear transformation of each such vector can then be done to accomplish the whitening function. The linear transformation corresponds a matrix vector multiplication. A alternative possibility is to solve a linear system of equations in order to obtain the output vector. In such operation the number of input signals to the whitening filter is the same as the number of output signals from the whitening filter.

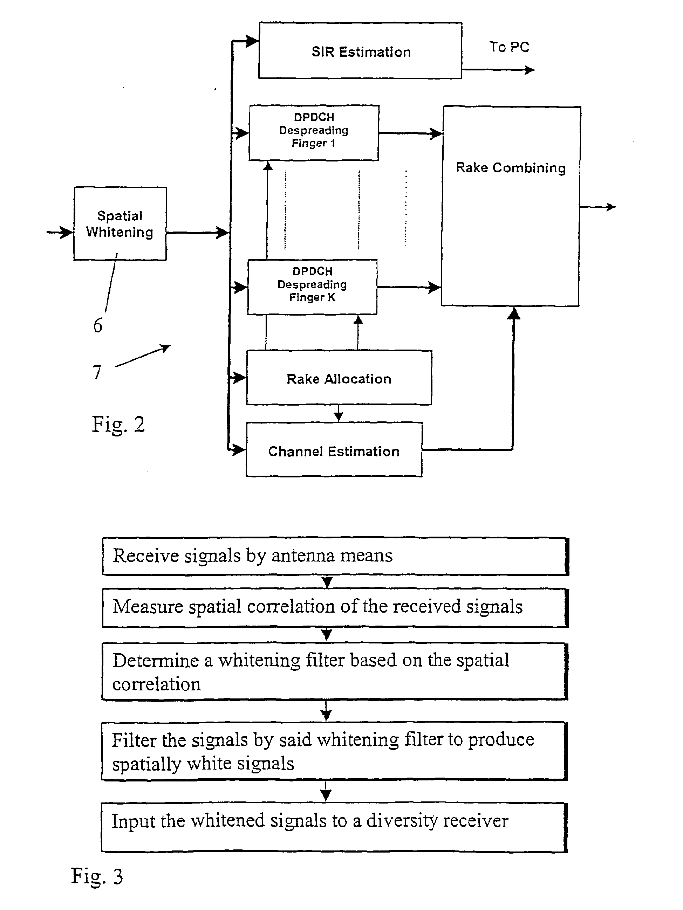

After the whitening filter stage 6 the whitened signals may be fed to the standard diversity receiver 7. The receiver 7 may be adapted to accomplish maximum ratio combining (MRC) of the signal branches for the purposes of per se known reception operations such as rake combining, rake allocation, SIR estimation and channel estimation. An example of such receiver is shown by Figure 2.

The diversity receiver may be adapted to assume that any noise and interference is uncorrelated between the antennas. Use of this assumption is advantageous since it enables use of substantially simple baseband algorithms for the rake combining, signal to interference ratio (SIR) estimation, rake allocation and so on. This procedure is also depicted in the block chart of Figure 1.

In Figure 1 the filtering is accomplished by the first function block 6 of the receiver arrangement 10. The proposed filtering method is preferably used in front of a standard maximum ratio combining (MRC) receiver. In accordance with the preferred embodiment the interference rejection functionality is centralised in a single block 6 instead of implementing the rejection capabilities at all places in which the signals from different diversity branches are combined.

The rejection is thus done at the front-end of the receiver, that is before the actual receiver operations. This type of implementation simplifies the receiver structure since the interference rejection capabilities need not to be implemented separately in the various units of the receiver, such as in the delay estimation, Rake allocation, SIR-estimation and Rake finger processing modules. The IRC may be implemented with a linear transformation of the signal before passing it to a simple receiver that assumes that the noise is spatially white.

The following will discuss a possible implementation of the spatial whitening filter that employs a technique known as a Cholesky factorisation. More particularly, the following will describe a pre-whitening IRC (W-IRC) concept. When compared to a standard maximum rate combining (MRC) rake receiver, a difference is that the received wideband signal after pulse 1 shape filtering is filtered at the front-end of the receiver with a memory-less spatial filter before any processing takes place. Thus the W-IRC receiver of the embodiment consists of an MRC rake receiver with a "whitening front-end". An exemplifying implementation of the filter is outlined in more detail later in this description.

A wideband covariance matrix is denoted as $\mathbf{R}_{wb}(t)$ in the following. The matrix can be defined as

$$\mathbf{R}_{wb}(t) = E\left\langle \mathbf{v}(t)\mathbf{v}^*(t) \right\rangle \tag{1}$$

wherein $^*$ denotes conjugate transpose, $E\langle . \rangle$ is the expected value and the vector $\mathbf{v}(t)$ holds the signals received by the all diversity branches. To be more specific, $\mathbf{v}(t)$ is a column vector in which the $k$th row holds the signal of the $k$th diversity branch sampled at time $t$.

The transformation matrix $\mathbf{W}$ may be chosen so that it satisfies

$$\mathbf{W}(t)\mathbf{W}^*(t) = \mathbf{R}_{wb}^{-1}(t) \tag{2}$$

The output from the whitening filter, $\mathbf{v}_w(t)$, is then given by

$$\mathbf{v}_w(t) = \mathbf{W}^*\mathbf{v}(t) \tag{3}$$

Note that by combining equations (2) and (3), the output after the whitening filter is spatially white

$$E\left\langle \mathbf{v}_w(t)\mathbf{v}_w^*(t) \right\rangle = E\left\langle \mathbf{W}^*\mathbf{v}(t)\mathbf{v}^*(t)\mathbf{W} \right\rangle = \mathbf{I} \tag{4}$$

wherein I is the identity matrix.

One possible solution for the whitening filter is to use a positive definite symmetric square root of the inverse wideband covariance matrix, which may be calculated from a singular value decomposition of the covariance matrix. This would require an implementation of a singular value decomposition and would result in a full $m \times m$ whitening filter. However, instead of this a Cholesky decomposition of the covariance matrix is preferably used.

The Cholesky decomposition of $\mathbf{R}_{wb}(t)$ may be written as

$$\mathbf{R}_{wb} = \mathbf{U}^*\mathbf{U} \tag{5}$$

where $\mathbf{U}$ is an upper triangular matrix.

If the filter $\mathbf{W}$ is chosen as the inverse of the Cholesky factor, i.e.

$$\mathbf{U}\mathbf{W} = \mathbf{I}_m \tag{6}$$

where $\mathbf{I}_m$ is the identity matrix of size m, then it follows that the above equation (2) is satisfied. Note that the whitening filter determined in equation (6) results in an upper triangular matrix.

The following considers in more detail an example of a possible implementation a whitening filter. In the example the incoming signals are sampled by sampling means. Various possibilities to sample signals and means for the sampling are known. Therefore the sampling means are not shown in Figure 1 for clarity.

The wideband covariance matrix can be updated at any rate in order to follow variations of the statistics of the received signals.

To construct a whitening filter, a sample covariance of $N_{WIRC}$ consecutive samples can be formed

$$\hat{\mathbf{R}}_{wb}[n] = \frac{1}{N_{WIRC}} \sum_{k=n-N_{WIRC}+1}^{n-1} \mathbf{v}(nT_s)\mathbf{v}^*(nT_s) \tag{7}$$

where $\mathbf{v}(t)$ is the signal after receive filtering and $T_s$ is the sampling period. The sampling period may be e.g. half of the chip period.

A Cholesky decomposition of the sample covariance may be written as

$$\hat{\mathbf{R}}_{wb}[n] = \mathbf{U}^*[n]\mathbf{U}[n] \tag{8}$$

where $\mathbf{U}[n]$ is an upper triangular matrix.

An interference detector (I-detector) is applied to the sample covariance matrix in order to find whether a diagonal matrix or a full matrix is the "best" model.

The whitening filter can then be determined by solving

$$\mathbf{U}[n]\mathbf{W}[n] = \mathbf{I}_m \tag{9}$$

If $\mathbf{v}(kT_s)$ are the samples of the received signal before whitening, and $\mathbf{v}_w(kT_s)$ is the signal after whitening, then they are related by

$$\mathbf{v}_w(nT_s) = \mathbf{W}^*\left[N_{WIRC}\left\lfloor\frac{n}{N_{WIRC}}\right\rfloor - N_{PD}\right]\mathbf{v}(nT_s) \tag{10}$$

Here, $N_{PD}$ is the *processing delay,* and term in ⌊x⌋ denotes the greatest integer less than x. Note that a new Cholesky factorisation and a new whitening filter are calculated once for each block of $N_{WIRC}$ received samples.

The processing delay may be assumed to be zero. A processing delay of zero means that after $N_{WIRC}$ samples have been received, the sample covariance of these samples are used to construct a whitening filter which is used on the very next sample. A negative processing delay with $N_{PD}=-N_{WIRC}$ means that $N_{WIRC}$ samples are stored in a buffer. The buffer may comprise any appropriate means for storing the samples. Since these are known, the buffer is not shown in Figure 1 for clarity. The buffer may be provided in the filter block or elsewhere in the receiver. The whitening filter is calculated from the buffered samples, and then applied to the very same buffer before the samples are released.

The above example can be summarised as follows: Do a cholesky of R_wb=U*U^*, then solve for an inverse of U (i.e. W=inv(U)) which is the whitening filter, whereafter the output for each sample is given by v_w=W*v.

Another possible algorithm could be: Determine an inverse of R_wb (i.e. calcualte inv(R_wb)), do a cholesky of the inv(R_wb)=W*W^*, whereafter the output for each sample is given by v_w=W*v.

Another alternative would be to not calculate a whitening filter at all but to proceed such that as a cholesky of the Rwb=U*U^* is calculated first whereafter the system U*v_w =v is solved for each sample by backward substitution.

It is possible to update the whitening filter after each received sample. This may be accomplished e.g. by using an appropriate square-root algorithm or the so called rank one updates of the cholesky factorisation and the whitening filter.

To be able to handle pulsed interference and/or rapidly time-varying interference, the received samples may need to be buffered so that the samples to which the whitening filter is applied to are the same as those based on which the filter is calculated. This is illustrated by the following example.

If an averaging length of 100 samples is used, while receiving the first 100 samples (numbered 1 to 100), it is possible to form the required sample covariance matrix. After reception of the 100th sample, the whitening filter can be calculated. The calculated whitening filter is then applied to the samples numbered 1 to 100. The whitening filter is not applied to samples with number 612 to 712 as these would correspond to a processing delay of 512 samples.

An averaging length of 256 chips is considered to be enough in normal occasions for the update rates. This means that the whitening filter is updated ten times per a slot. However, this rate may be changed to any other appropriate rate, such as five times per slot. The buffering may cause some delay to the closed loop power control. However, in the presence of interference, the performance degradation caused by this must be compared to the gains obtained in interference rejection.

It shall be appreciated that whilst embodiments of the present invention have been described in relation to diversity antennae where fading between antennas is uncorrelated, embodiments of the present invention may also be applicable to other type of receivers. For example, without limiting to these, the proposed solution may be applied as such also for beamforming in macro cells with lambda/2 spaced antennas, that is for a digital beamforming approach for rake receivers. In such as case the angular spread is small and correlation between antennas is high. The whitening filter makes no assumptions on the fading correlation, and it can be anything between zero and one. Thus the invention may be applied for antennae separated half a wave lengths and small angular spread (e.g. macro cells), and also for polarisation diversity.

A concept employing digital beamforming may assume that the fading is highly correlated between the antennas. Thus it is possible to parameterise the channels based on the direction of arrival of the signals in the channel estimation/rake allocation. The signals may be transformed with inv(Rhat) instead of with sqrtm(inv(Rhat)) since the steering vectors may also need to whitened in the same way as the data signals are whitened. This may simplify further the implementation since no factorisation (such as a cholesky decomposition) is needed. Instead, the whitening filter may then simply be the inverse of the received signal covariance, and the resulting beamformer will be w=inv(Rhat)a(\theta). Thus the invention is believed to be applicable to all kinds of environments independent on whether direction of arrival information is used or not. A digital beamformer as such as known and is thus not shown in Figure 1 for clarity.

The pre-whitening unit may be made a part of the antenna means. In such a case the reference point for the measurements is preferably the antenna connector.

The modular pre-whitening unit may also be retrofitted to existing base stations, which may have previously been using baseband receiver algorithms based on spatially, white interference and noise assumption. This may be enabled by application of the pre-whitening unit as a part of the antenna means. The possibility of retrofitting is useful if e.g. interference from a co-sited GSM system turns out to be a severe problem after installation of a WCDMA base station.

It shall be appreciated that there are several ways to implement a whitening filter. What is important is that a separate whitening front-end is hooked up with a receiver.

It shall also be appreciated that whilst embodiments of the present invention have been described in relation to stations of a mobile communication systems, embodiments of the present invention are applicable to any other suitable type of stations. The invention is rather intended for any receivers with diversity and interference rejection combining (IRC). The above described embodiments are believed to be especially applicable to base stations with receive with diversity (spatial diversity and/or polarisation diversity) and also to mobile terminals with receive diversity. However, any other possible applications are not excluded.

The embodiment of the present invention has been described in the context of a CDMA system. This invention is also applicable to any other access techniques including frequency division multiple access (FDMA), time division multiple access (TDMA) or space division multiple access (SDMA) as well as any hybrids thereof.

It shall also be appreciated that the inventive concept is not limited for use in handling of external interference only but can be used to reject any kind of interference. The studies by the inventors associated the external interference caused by GSM (Global System for Mobile communication) base stations and adjacent channel interference from other WCDMA carriers have indicated that the interference levels caused to the CDMA system can be significant and thus any rejection of this interference is advantageous. There is no reason to believe that the proposed solution could not provide similar advantages when applied to other systems and other type of interference.

It is also noted herein that while the above describes exemplifying embodiments of the invention, there are several variations and modifications which may be made to the disclosed solution without departing from the scope of the present invention as defined in the appended claims.

**Claims**

**1.** An interference rejection method for use in a receiver (10) comprising:

receiving a plurality of code division multiple access (CDMA) signals;
determining a spatial correlation of the received CDMA signals;
filtering the CDMA signals by a whitening filter (6) that is determined based on said determined spatial correlation;
outputting spatially white CDMA signals from the filter (6); and
inputting the whitened CDMA signals to a diversity receiver (7) by providing said whitened CDMA signals as input to at least one of a signal to interference ratio estimator, a despreader, a rake allocator and a channel estimator.

2. A method as claimed in claim 1, wherein the diversity receiver (7) comprises a maximum ratio combining receiver.

3. A method as claimed in claim 1 or 2, comprising use of Cholesky factorisation.

4. A method as claimed in any preceding claim, comprising use of an inverse of a Cholesky factor.

5. A method as claimed in any preceding claim, comprising use of a Cholesky decomposition.

6. A method as claimed in any preceding claim, wherein the step of determining the spatial correlation comprises sampling the CDMA signals.

7. A method as claimed in any preceding claim, wherein the whitening filter (6) is updated in predefined intervals.

8. A method as claimed in claims 6 and 7, wherein the update is performed after each received sample.

9. A method as claimed in any of claims 6 to 8, comprising buffering of samples.

10. A method as claimed in any preceding claim, wherein the filtering is based on matrix times vector multiplication.

11. A method as claimed in any preceding claim, wherein signals received by different antennae (3,4) at a given time are collected into a vector.

12. A method as claimed in any preceding claim, wherein the diversity receiver (7) assumes that any noise and interference is uncorrelated between different antennae (3,4).

13. A method as claimed in any preceding claim, wherein a CDMA signals is sampled at a rate which is twice the chiprate of the signal.

14. A method as claimed in claim 13, wherein a matrix vector multiplication is processed at the sampling rate.

15. A method as claimed in any preceding claim, wherein the CDMA signals are received by at least two antennae (3,4).

16. A method as claimed in any preceding claim, wherein digital beamforming is used for the reception of CDMA signals.

17. A method as claimed in any preceding claim, comprising use of information regarding the direction of arrival of the CDMA signals.

18. A receiver (10) comprising:

means for determining spatial correlation of a plurality of received CDMA signals;
filter means (6) adapted to filter the CDMA signals with a whitening filter that has been determined based on said spatial correlation; and
a diversity receiver means (7) located such that spatially white CDMA signals from the filter means (6) are input in the diversity receiver means, said whitened CDMA signals being provided as input to at least one of a signal to interference ratio estimator, a despreader, a rake allocator and a channel estimator.

19. A receiver (10) as claimed in claim 18, wherein the filter means (6) are implemented by means of a modular entity at the front end of a maximum ratio combining receiver (7).

20. A receiver (10) as claimed in claim 18 or 19, wherein all interference rejection combining operations are adapted to be accomplished at one functional entity.

21. A receiver (10) as claimed in any of claims 18 to 20, comprising sampling means for sampling the signals.

22. A receiver (10) as claimed in any of claims 18 to 21, wherein the filter means (6) is adapted to be updated in predefined intervals.

23. A receiver (10) as claimed in claim 21 or 22, comprising sample buffering means.

24. A receiver (10) as claimed in any of claims 18 to 23, comprising at least two reception antennae (3,4).

25. A receiver (10) as claimed in any of claims 18 to 24, comprising a digital beamformer.

26. A receiver as claimed in any of claims 18 to 25 adapted to use information regarding the direction of arrive of the CDMA signals in rejection of interference.

27. A station of a cellular communication system, comprising antenna means (2,3) and the receiver of claim 18.

28. A station as claimed in claim 27, wherein the station employs code division multiple access in communication with another station.

29. A station as claimed in claim 27 or 28, wherein the diversity receiver means (7) comprise a maximum ratio combining receiver.

30. A station as claimed in any of claims 27 to 29, comprising sampling means for sampling the CDMA signals.

31. A station as claimed in any of claims 27 to 30, wherein the filter means (6) is adapted to be updated in predefined intervals.

32. A station as claimed in claim 30 or 31, comprising sample buffering means.

33. A station as claimed in any of claims 27 to 32, comprising at least two reception antennae means (3,4).

34. A station as claimed in any of claims 27 to 33 adapted to reject interference based on information regarding the direction of arrival of the CDMA signals.

35. A station as claimed in any of claims 27 to 34, comprising a base station.

36. A station as claimed in any of claims 27 to 34, comprising a mobile station.

37. A method as claimed in any one of claims 1 to 17, wherein the CDMA signals are wideband CDMA signals.

38. A receiver as claimed in any one of claims 18 to 26, wherein the CDMA signals are wideband CDMA signals.

39. A station as claimed in any one of claims 27 to 36, wherein the CDMA signals are wideband CDMA signals.

**Patentansprüche**

1. Störungsunterdrückungsverfahren zur Verwendung in einem Empfänger (10) mit:

   Empfangen einer Vielzahl von Codemultiplex-(CDMA)-Signalen;
   Bestimmen einer räumlichen Korrelation der empfangenen CDMA-Signale;
   Filtern der CDMA-Signale mit einem Weißungsfilter (6), der basierend auf der festgestellten räumlichen Korrelation bestimmt wird;
   Ausgeben räumlich weißer CDMA-Signale aus dem Filter (6); und
   Eingeben der geweißten CDMA-Signale in einen Diversitätsempfänger (7) durch Zuführen der geweißten CDMA-Signale als Eingabe in zumindest einen aus einem Signal-Störungs-Verhältnis-Schätzer, einen Entspreizer, einen Rake-Zuweiser und einen Kanalschätzer.

2. Verfahren nach Anspruch 1, wobei der Diversitätsempfänger (7) einen Maximalratenkombinierempfänger umfasst.

3. Verfahren nach Anspruch 1 oder 2, mit Verwenden einer Cholesky-Faktorisation.

4. Verfahren nach einem der vorhergehenden Ansprüche, mit Verwenden eines Inversen eines Cholesky-Faktors.

5. Verfahren nach einem der vorhergehenden Ansprüche, mit Verwenden einer Cholesky-Zerlegung.

6. Verfahren nach einem der vorhergehenden Ansprüche, wobei der Schritt des Bestimmens der räumlichen Korrelation ein Abtasten der CDMA-Signale umfasst.

7. Verfahren nach einem der vorhergehenden Ansprüche, wobei der Weißungsfilter (6) in vorbestimmten Intervallen aktualisiert wird.

8. Verfahren nach Anspruch 6 und 7, wobei die Aktualisierung nach jedem empfangenen Abtastwert durchgeführt wird.

9. Verfahren nach einem der Ansprüche 6 bis 8, mit Puffern der Abtastwerte.

10. Verfahren nach einem der vorhergehenden Ansprüche, wobei die Filterung auf einer Multiplikation einer Matrix mit einem Vektor basiert.

11. Verfahren nach einem der vorhergehenden Ansprüche, wobei von verschiedenen Antennen (3, 4) zu einem gegebenen Zeitpunkt empfangene Signale in einem Vektor gesammelt werden.

12. Verfahren nach einem der vorhergehenden Ansprüche, wobei der Diversitätsempfänger (7) annimmt, dass Rauschen und Störung zwischen verschiedenen Antennen (3, 4) unkorreliert ist.

13. Verfahren nach einem der vorhergehenden Ansprüche, wobei ein CDMA-Signal mit einer Rate abgetastet wird, die dem doppelten der Chiprate des Signals entspricht.

14. Verfahren nach Anspruch 13, wobei eine Matrix-Vektor-Multiplikation unter der Abtastrate verarbeitet wird.

15. Verfahren nach einem der vorhergehenden Ansprüche, wobei die CDMA-Signale von zumindest zwei Antennen (3, 4) empfangen werden.

16. Verfahren nach einem der vorhergehenden Ansprüche, wobei eine digitale Strahlformung für den Empfang der CDMA-Signale verwendet wird.

17. Verfahren nach einem der vorhergehenden Ansprüche, mit Verwenden einer die Ankunftsrichtung der CDMA-Signale betreffenden Information.

18. Empfänger (10) mit:

einer Einrichtung zum Bestimmen einer räumlichen Korrelation einer Vielzahl empfangener CDMA-Signale;
einer Filtereinrichtung (6) ausgestaltet zum Filtern der CDMA-Signale mit einem Weißungsfilter, das basierend auf der räumlichen Korrelation ermittelt wurde; und
einer Diverstitätsempfängereinrichtung (7), die so platziert ist, dass räumlich weiße CDMA-Signale von der Filtereinrichtung (6) in die Diversitätsempfängereinrichtung eingegeben werden, wobei die geweißten CDMA-Signale als Eingabe in zumindest einen aus einem Signal-Störungs-Verhältnis-Schätzer, einem Entspreizer, einem Rake-Zuweiser und einem Kanalschätzer zugeführt werden.

19. Empfänger (10) nach Anspruch 18, wobei die Filtereinrichtung (6) mittels einer modularen Einheit am Front-End eines Maximalratenkombinierempfängers (7) implementiert ist.

20. Empfänger (10) nach Anspruch 18 oder 19, wobei alle Störungsunterdrückungskombinieroperationen ausgestaltet sind zur Erledigung in einer funktionalen Einheit.

EP 1 371 146 B1

**21.** Empfänger (10) nach einem der Ansprüche 18 bis 20, mit einer Abtasteinrichtung zum Abtasten der Signale.

**22.** Empfänger (10) nach einem der Ansprüche 18 bis 21, wobei die Filtereinrichtung (6) ausgestaltet ist zur Aktualisierung in vorbestimmten Zeitintervallen.

**23.** Empfänger (10) nach Anspruch 21 oder 22, mit einer Abtastpuffereinrichtung.

**24.** Empfänger (10) nach einem der Ansprüche 18 bis 23, mit zumindest zwei Empfangsantennen (3, 4).

**25.** Empfänger (10) nach einem der Ansprüche 18 bis 24, mit einer digitalen Strahlformungseinrichtung.

**26.** Empfänger nach einem der Ansprüche 18 bis 25, ausgestaltet zum Verwenden einer Information bezüglich der Ankunftsrichtung der CDMA-Signale bei der Störungsunterdrückung.

**27.** Station eines zellularen Kommunikationssystems, mit Antennenmitteln (2, 3) und dem Empfänger nach Anspruch 18.

**28.** Station nach Anspruch 27, wobei die Station bei der Kommunikation mit einer anderen Station ein Codemultiplex einsetzt.

**29.** Station nach Anspruch 27 oder 28, wobei die Diversitätsempfängereinrichtung (7) ein Maximalratenkombinierempfänger umfasst.

**30.** Station nach einem der Ansprüche 27 bis 29, mit einer Abtasteinrichtung zum Abtasten der CDMA-Signale.

**31.** Station nach einem der Ansprüche 27 bis 30, wobei die Filtereinrichtung (6) ausgestaltet ist zur Aktualisierung in vorbestimmten Intervallen.

**32.** Station nach Anspruch 30 oder 31, mit einer Abtastpuffereinrichtung.

**33.** Station nach einem der Ansprüche 27 bis 32, mit zumindest zwei Empfangsantennenmitteln (3, 4).

**34.** Station nach einem der Ansprüche 27 bis 33, ausgestaltet zum Unterdrücken einer Störung basierend auf einer Information bezüglich der Ankunftsrichtung der CDMA-Signale.

**35.** Station nach einem der Ansprüche 27 bis 34, mit einer Basisstation.

**36.** Station nach einem der Ansprüche 27 bis 34, mit einer Mobilstation.

**37.** Verfahren nach einem der Ansprüche 1 bis 17, wobei die CDMA-Signale Breitband-CDMA-Signale sind.

**38.** Empfänger nach einem der Ansprüche 18 bis 26, wobei die CDMA-Signale Breitband-CDMA-Signale sind.

**39.** Station nach einem der Ansprüche 27 bis 36, wobei die CDMA-Signale Breitband-CDMA-Signale sind.

**Revendications**

**1.** Procédé de rejet des interférences destiné à être utilisé dans un récepteur (10) comprenant :

la réception d'une pluralité de signaux d'accès multiple par répartition de code (AMRC) ;
la détermination d'une corrélation spatiale des signaux AMRC reçus ;
le filtrage des signaux AMRC par un filtre blanchissant (6) qui est déterminé sur la base de ladite corrélation spatiale déterminée ;
la sortie des signaux AMRC blancs spatialement du filtre (6) ; et
l'entrée des signaux AMRC blanchis dans un récepteur de diversité (7) en fournissant lesdits signaux AMRC blanchis en tant qu'entrée à au moins l'un d'un estimateur de rapport de signal sur interférences, d'un désétaleur, d'un allocateur Rake et d'un estimateur de canal.

**2.** Procédé selon la revendication 1, dans lequel le récepteur de diversité (7) comprend un récepteur de combinaison de rapport maximum.

**3.** Procédé selon la revendication 1 ou 2, comprenant l'utilisation de la factorisation de Cholesky.

**4.** Procédé selon l'une quelconque des revendications précédentes, comprenant l'utilisation d'un inverse d'un facteur de Cholesky.

**5.** Procédé selon l'une quelconque des revendications précédentes, comprenant l'utilisation d'une décomposition de Cholesky.

**6.** Procédé selon l'une quelconque des revendications précédentes, dans lequel l'étape de détermination de la corrélation spatiale comprend l'échantillonnage des signaux AMRC.

**7.** Procédé selon l'une quelconque des revendications précédentes, dans lequel le filtre blanchissant (6) est mis à jour à des intervalles prédéfinis.

**8.** Procédé selon les revendications 6 et 7, dans lequel la mise à jour est effectuée après chaque échantillon reçu.

**9.** Procédé selon l'une quelconque des revendications 6 à 8, comprenant la mise en tampon des échantillons.

**10.** Procédé selon l'une quelconque des revendications précédentes, dans lequel le filtrage est basé sur la multiplication de matrice par vecteur.

**11.** Procédé selon l'une quelconque des revendications précédentes, dans lequel les signaux reçus par différentes antennes (3, 4) à un moment donné sont collectés dans un vecteur.

**12.** Procédé selon l'une quelconque des revendications précédentes, dans lequel le récepteur de diversité (7) suppose que les bruits et les interférences ne sont pas corrélés entre différentes antennes (3, 4).

**13.** Procédé selon l'une quelconque des revendications précédentes, dans lequel un signal AMRC est échantillonné à une fréquence égale au double du débit des éléments du signal.

**14.** Procédé selon la revendication 13, dans lequel la multiplication de matrice par vecteur est traitée à la fréquence d'échantillonnage.

**15.** Procédé selon l'une quelconque des revendications précédentes, dans lequel les signaux AMRC sont reçus par au moins deux antennes (3, 4).

**16.** Procédé selon l'une quelconque des revendications précédentes, dans lequel la formation de faisceau numérique est utilisée pour la réception de signaux AMRC.

**17.** Procédé selon l'une quelconque des revendications précédentes, comprenant l'utilisation d'informations concernant la direction d'arrivée des signaux AMRC.

**18.** Récepteur (10) comprenant :

un moyen pour déterminer la corrélation spatiale d'une pluralité de signaux AMRC reçus ;
un moyen de filtrage (6) apte à filtrer les signaux AMRC avec un filtre blanchissant qui a été déterminé en fonction de ladite corrélation spatiale ; et
un moyen récepteur de diversité (7) disposé de sorte que les signaux AMRC blancs spatialement provenant du moyen de filtrage (6) sont entrés dans le moyen récepteur de diversité, lesdits signaux AMRC blanchis étant fournis en tant qu'entrée à au moins l'un d'un estimateur de rapport de signal sur interférences, d'un désétaleur, d'un allocateur Rake et d'un estimateur de canal.

**19.** Récepteur (10) selon la revendication 18, dans lequel le moyen de filtrage (6) est mis en oeuvre par le biais d'une entité modulaire à l'extrémité avant d'un récepteur de combinaison de rapport maximal (7).

**20.** Récepteur (10) selon la revendication 18 ou 19, dans lequel toutes les opérations de combinaison de rejet d'interférences sont aptes à être accomplies au niveau d'une entité fonctionnelle.

**21.** Récepteur (10) selon l'une quelconque des revendications 18 à 20, comprenant un moyen d'échantillonnage pour échantillonner les signaux.

**22.** Récepteur (10) selon l'une quelconque des revendications 18 à 21, dans lequel le moyen de filtrage (6) est apte à être mis à jour à des intervalles prédéfinis.

**23.** Récepteur (10) selon la revendication 21 ou 22, comprenant un moyen de mise en tampon d'échantillons.

**24.** Récepteur (10) selon l'une quelconque des revendications 18 à 23, comprenant au moins deux antennes de réception (3, 4).

**25.** Récepteur (10) selon l'une quelconque des revendications 18 à 24, comprenant un formateur de faisceau numérique.

**26.** Récepteur selon l'une quelconque des revendications 18 à 25, apte à utiliser des informations concernant la direction d'arrivée des signaux AMRC dans le rejet d'interférences.

**27.** Station d'un système de communication cellulaire, comprenant des moyens d'antenne (2, 3) et le récepteur de la revendication 18.

**28.** Station selon la revendication 27, dans laquelle la station emploie l'accès multiple par répartition de code en communication avec une autre station.

**29.** Station selon la revendication 27 ou 28, dans laquelle le moyen récepteur de diversité (7) comprend un récepteur de combinaison de rapport maximal.

**30.** Station selon l'une quelconque des revendications 27 à 29, comprenant un moyen d'échantillonnage pour échantillonner les signaux AMRC.

**31.** Station selon l'une quelconque des revendications 27 à 30, dans laquelle le moyen de filtrage (6) est apte à être mis à jour à des intervalles prédéfinis.

**32.** Station selon la revendication 30 ou 31, comprenant un moyen de mise en tampon d'échantillons.

**33.** Station selon l'une quelconque des revendications 27 à 32, comprenant au moins deux moyens d'antenne de réception (3, 4).

**34.** Station selon l'une quelconque des revendications 27 à 33, apte à rejeter les interférences sur la base d'informations concernant la direction d'arrivée des signaux AMRC.

**35.** Station selon l'une quelconque des revendications 27 à 34, comprenant une station de base.

**36.** Station selon l'une quelconque des revendications 27 à 34, comprenant une station mobile.

**37.** Procédé selon l'une quelconque des revendications 1 à 17, dans lequel les signaux AMRC sont des signaux AMRC de bande large.

**38.** Récepteur selon l'une quelconque des revendications 18 à 26, dans lequel les signaux AMRC sont des signaux AMRC de bande large.

**39.** Station selon l'une quelconque des revendications 27 à 36, dans laquelle les signaux AMRC sont des signaux AMRC de bande large.

EP 1 371 146 B1

2  3

E I
AWGN
$n(t)$

IRC Receiver

$r_1(t)$

**Whitening Filter**

Estimate spatial color
$$\mathbf{R} = E\left\langle \mathbf{r}(t)\mathbf{r}^*(t)\right\rangle$$
Whitening filter satisfies
$$\mathbf{W}\mathbf{W}^* \doteq \mathbf{R}^{-1}$$
Output signal
$$\mathbf{v}(t) = \mathbf{W}^*\mathbf{r}(t)$$

$v_1(t)$

$\mathbf{v}(t)$

Standard
MRC
Receiver

$\sum_l h_l \delta(t-\tau_l)$

$y(t)$

$\mathbf{r}(t)$

$r_m(t)$

$v_m(t)$

U E
$p(t)$

M A I
$m(t)$

1  4  6  10  7

Fig. 1

SIR Estimation

To PC

DPDCH
Despreading
Finger 1

Rake Combining

Spatial
Whitening

6

7

DPDCH
Despreading
Finger K

Rake Allocation

Fig. 2

Channel Estimation

Receive signals by antenna means

Measure spatial correlation of the received signals

Determine a whitening filter based on the spatial correlation

Filter the signals by said whitening filter to produce spatially white signals

Input the whitened signals to a diversity receiver

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6091361 A

**Non-patent literature cited in the description**

- **ILTIS R.A. et al.** A DS spread spectrum RAKE received with narrowband interference rejection capability: operation in fading channels. *Military Communications Conference, 1989 IEEE,* 1989, vol. 3, 704-708